# EUROPEAN PATENT APPLICATION

(11) **EP 4 620 751 A1**
(43) Date of publication of application: **24.09.2025**
(21) Application number: 25165354.9
(22) Date of filing: 21.03.2025
(51) Int. Cl.: B60S 1/56, G03B 17/08, B60S 1/54, B60S 1/52

(54) **SURFACE-MOUNTED CAMERA SYSTEM FOR VEHICLES**

(30) Priority: 22.03.2024 DE 102024108355
(71) Applicant: Motherson Innovations Company Ltd., London EC2N 2AX (GB)
(72) Inventor: Negel, Raimund, 70327 Stuttgart (DE)
(74) Representative: Isarpatent

(57) **Abstract**

The present invention relates to a surface-mounted camera system for vehicles, designed to enhance visual capture while integrating seamlessly with the vehicle's exterior. The disclosed system comprises a camera featuring a lens with distinct effective and non-effective surfaces. The effective surface corresponds to a surface for capturing a desired field of view for a specific camera-enable function of a vehicle. A specially designed cover can be position onto the camera and its lens and potentially also on one or more cleaning nozzles. This cover comprises a cut-out. When mounted, the cover aligns with the lens in such a way that it shields the non-effective surface while leaving the effective surface exposed.

## Description

### FIELD OF INVENTION

The present disclosure relates to the field of cameras integration on surfaces, and more particularly the invention relates to the integration of cameras and potentially accompanying cleaning nozzles over external surfaces of vehicles or external surfaces of add-on elements/attachments added to the external surface/bodywork of a vehicle.

### BACKGROUND

The integration of surface-mounted camera systems on vehicles (that to say cameras onto external bodywork of vehicles or onto add-on elements/attachments added to the external surface/bodywork of a vehicle) is an increasing trend. It aims at enhancing safety, security, and the overall driving experience for the users of vehicles. Indeed, these cameras now provide a myriad of camera-enabled functionalities ranging from improved visibility around the vehicle to contributing to advanced driver assistance systems (ADAS). Rear-view and side-view cameras, for instance, have now become commonplace, offering drivers enhanced visibility and aiding in tasks such as reversing and lane changing. These cameras contribute to convenience of use by facilitating easier parking through advanced parking assistance systems, including semi-autonomous parking capabilities.

Moreover, these camera systems can also be used in collision avoidance technologies, continuously monitoring the surroundings of the vehicles to detect potential hazards and, in some instances, autonomously applying brakes to prevent or mitigate collisions. They also play a central role in ADAS, supporting features like adaptive cruise control and lane-keeping assist, thereby making driving less strenuous and safer.

Another significant application of surface-mounted cameras is in security and surveillance, where they can record footage of the vehicle's surroundings, providing valuable evidence in the event of accidents or theft. As technology progresses, the capabilities and applications of these cameras are expected to expand even further.

In the context of this increased occurrence and number of cameras to be installed on the external surfaces of vehicles and/or on add-on elements/attachments added to the external surface/bodywork of a vehicle, the integration of cameras and potentially their accompanying cleaning nozzles onto vehicle exteriors presents increased challenges. Indeed, the mechanical integration involves considerations on how cameras are positioned and protected against external damages and environmental conditions such as dirt or road salt. Traditional solutions have involved configurations where cameras and nozzles protrude from the vehicle's bodywork or from the external surface of add-on elements/attachments, protected by cylindrical cut-outs for the cameras and additional mechanisms for the nozzles to spray cleaning fluids. However, these setups often expose camera systems to damage and dirt accumulation, impacting their functionality and the vehicle's aesthetics in that the visible or perceivable surface footprint of the camera system from the outside is rather great, when considering all the elements that are protruding and the number of camera systems that need to be positioned around the vehicle.

Reference is made to US 2022/0 094 831 A1 showing a rectangular cut-out in a housing of a camera.

DE 20 2020 104 648 U1 shows a surface-mounted camera system with a nozzle.

DE 10 2022 128 774 A1 shows a camera system for a vehicle mounted on a roof of a car.

DE 20 2015 102 640 U1 shows a camera mounting bracket.

Given the limitations of existing designs, there is a clear need for an improved surface-mounted camera system. Such a system should seamlessly integrate into the vehicle's bodywork or add-on elements/attachments added to the external surface/bodywork of a vehicle, ensuring optimal protection and functionality while maintaining the vehicle's aesthetic appeal. The present invention aims at addressing these challenges by offering a novel design that enhances the durability, efficiency, and visual integration of camera systems in vehicles.

### SUMMARY

The invention is defined by the independent claims. A first aspect of the present invention is a surface-mounted camera system for vehicles, comprising: a camera with a lens designed to capture images, wherein a surface of the lens comprises a non-effective surface and an effective surface, wherein the effective surface of the lens is a surface of the lens corresponding to a desired field of view and the non-effective surface is a surface of the lens not corresponding to the desired field of view; a cover positioned onto the camera, wherein the cover comprises a cut-out performed from an internal surface of the cover to an external surface of the cover, wherein the internal surface of the cover is positioned onto the camera such that the cut-out of the cover aligns with the lens of the camera and covers the non-effective surface whilst leaving the effective surface of the lens exposed in the direction of the external surface of the cover through the cut-out.

In an embodiment of the first aspect of the invention, the system further comprises: a cleaning nozzle configured to spray a cleaning fluid or air and positioned such as to spray in the direction of the lens to clean the surface of the lens; wherein the cover further comprises a nozzle recess performed in a wall of the cut-out in the side of the internal surface of the cover, wherein nozzle recess is configured to leave room for the nozzle when the cover is positioned onto it.

In an embodiment of the first aspect of the invention, the cut-out of the cover is greater on the external surface of the cover than on the internal surface.

In an embodiment of the first aspect of the invention, the nozzle is completely concealed within the nozzle recess of the cover.

In an embodiment of the first aspect of the invention, the nozzle and the nozzle recess are positioned on a top wall of the cut-out and the nozzle is positioned to spray onto the surface of the lens in a substantially downward direction.

In an embodiment of the first aspect of the invention, wherein the cleaning nozzle comprises a plurality of nozzles with at least one nozzle for spraying liquid and at least one another for spraying gas.

In an embodiment of the first aspect of the invention, the system further comprises a sealing element positioned between the cover and the camera and/or nozzles to prevent wind noise and liquid infiltration.

In an embodiment of the previous embodiment of the first aspect of the invention, the sealing element is configured to match a form of the camera and a form of the nozzle for insertion of the camera and the nozzle into it and the sealing element is further configured to match a form of a portion of the internal surface of the cover for the internal surface of the cover to be positioned onto it.

In an embodiment of the first aspect of the invention, the cover is in two parts, with one comprising the walls of the cut-out.

A second aspect of the invention is a vehicle comprising at least one surface-mounted camera system of the first aspect.

The surface-mounted camera system according to the invention is in particular a system seamlessly integrated into the vehicle's bodywork or add-on elements/attachments added to the external surface/bodywork of a vehicle.

The details of one or more embodiments are set forth in the accompanying drawings and the description below. Other features will be apparent from the description and drawings, and from the claims.

### BRIEF DESCRIPTION OF THE DRAWINGS

Fig. 1 illustrates a configuration for a surface-mounted camera on a vehicle according to prior art.
Fig. 2 illustrates a cut view of the surface-mounted camera system according to the conventional embodiment of Fig. 1.
Fig. 3 illustrates the minimal possible cut-out with a round lens hole or cut-out performed on a cover part of the bodywork of a vehicle.
Fig. 4 illustrates the elements that can be integrated in an embodiment according to the present invention.
Fig. 5 illustrates an embodiment of the present invention with a minimal cut-out possible with substantially rectangular shape.
Fig. 6 is a cut view of the surface-mounted camera system 100 according to an embodiment of the invention as presented in Fig. 5.

### DETAILED DESCRIPTION OF THE EMBODIMENTS

Hereinafter, the embodiments will now be described in detail with reference to the accompanying drawings. However, the disclosure cannot be limited to the embodiment in which the idea of the disclosure is presented, and another embodiment included within range of idea of another backward disclosure or the present disclosure may be easily proposed by addition, change, deletion and the like of another element.

The terms used in this specification were selected to include current, widely used general terms. In certain cases, a term may be one that was arbitrarily established by the applicant. In such cases, the meaning of the term will be defined in the relevant portion of the detailed description. As such, the terms used in the specification are not to be defined simply by the name of the terms but are to be defined based on the meanings of the terms as well as the overall description of the present disclosure.

The term "vehicle" used in the present disclosure encompasses a broad spectrum of transportation means, deliberately chosen for its inclusive nature to ensure that the disclosure is not limited to a specific category but rather extends to a wide array of vehicular types. This inclusivity allows for the application of the discussed technologies and principles across various forms of transportation, whether they be land-based, such as cars, trucks, motorcycles, and bicycles, which navigate our roads and highways, or specialized vehicles like buses and trams that serve public transportation needs. It also covers off-road vehicles like ATVs and snowmobiles, designed for recreational or utility purposes in environments beyond conventional roads. Furthermore, the term gracefully extends to watercraft, including boats and ships, which traverse our waterways, as well as aircraft, ranging from airplanes to helicopters, which navigate the skies. By using the non-limiting term "vehicle," the discourse deliberately embraces the diversity of transportation means available, acknowledging that innovations and advancements in one area can often translate into benefits and improvements across the entire spectrum of vehicular technology.

Hereinafter, embodiments of the present invention will be described in detail with reference to the accompanying drawings. It should be noted that the same reference numerals are used to designate the same or similar elements throughout the drawings.

Nowadays vehicles are increasingly being equipped with an increasing number of cameras on their surfaces or on the surface of add-on elements/attachments added to the external surface/bodywork of a vehicle to respond to an increasing demand for camera related functionalities aiming at enhancing both safety and user experience.

One of the first and main benefits of these surface-mounted cameras is the greatly improved visibility they provide around the vehicle. Indeed, rear-view cameras, for example, have become almost ubiquitous, eliminating the blind spots behind vehicles and making reversing into tight spaces safer and more convenient. Similarly, side-view cameras extend this enhanced visibility to the vehicle's flanks, offering enormous advantages during lane changes or when navigating through narrow spaces.

Further, beyond offering a better view of the surroundings, these cameras can be part of advanced parking assistance systems, where they can offer drivers a 360-degree view around the vehicle, providing a simplified visual help for the driver to simplify the process of parking in tight spots. Some of the more advanced systems using these surface-mounted cameras even enable semi-autonomous parking, where the car takes over the steering while guiding itself into a parking space, requiring minimal input from the driver.

These cameras extend can also be used for the functions of collision avoidance systems. The continuous monitoring of the areas around the vehicle allows to detect potential obstacles, hazards, or changes in traffic conditions. Such system can alert the driver of another vehicle, a pedestrian stepping onto the road, or unexpected debris, or can even in some cases, automatically apply the brakes to prevent or mitigate a collision.

Furthermore, these cameras are also the key element of many Advanced Driver Assistance Systems (ADAS) providing functions such as adaptive cruise control, which adjusts the vehicle's speed based on the traffic ahead, and lane-keeping assist, which helps keep the car centered in its lane, rely heavily on the input from these cameras. This not only makes driving safer but also reduces the strain on the driver during long trips or in dense traffic.

Another camera-enabled functionality for vehicle relates to vehicle security and surveillance, as these surface-mounted camera can record footage of the surroundings, providing valuable evidence in the event of an accident or theft.

As technology advances, the capabilities and applications of these cameras are only set to expand. However, these cameras need to be seamlessly integrated on the external surface of the vehicles or to the external surface of add-on elements/attachments added to the external surface/bodywork of a vehicle. This seamless integration creates challenges. For instance, there are questions related to the mechanical integration of these cameras, that is to say how they are mechanically positioned, fixed and protrude to the outside of the vehicle to perform their main function (i.e., capturing/imaging a certain field of view). They must be fixed to the vehicle or to the add-on elements/attachments, whilst being connected to the inside (inside the add-on elements/attachments or the bodywork) and ensuring the sealing of the place at which they protrude.

In addition, these surface-mounted cameras are operated outside in an environment that exposes their external surfaces to damages or to dirt. That is to say that the camera must be mechanically protected from potential sources of external damages and also protected from dirt or salt deposited on roads. This latter point is very important in that the external surface(s) of the camera lens must be kept clear from any type of dirt to be capable of capturing/imaging a field of view. A solution of the conventional art consists in providing the surface at which the camera is mounted with one or more nozzles that are configured to spray air and/or a liquid (such as cleaning liquid or water) to clean the surface of the camera lens from any dirt that may be deposited onto it as it is exposed to outside conditions, especially when driving. These nozzles are placed in a surrounding area of the place where the surface-mounted camera protrudes toward the outside of the vehicle or vehicle added element, with the same issue in terms of mechanical integration (in particular the way they protrude and their sealing).

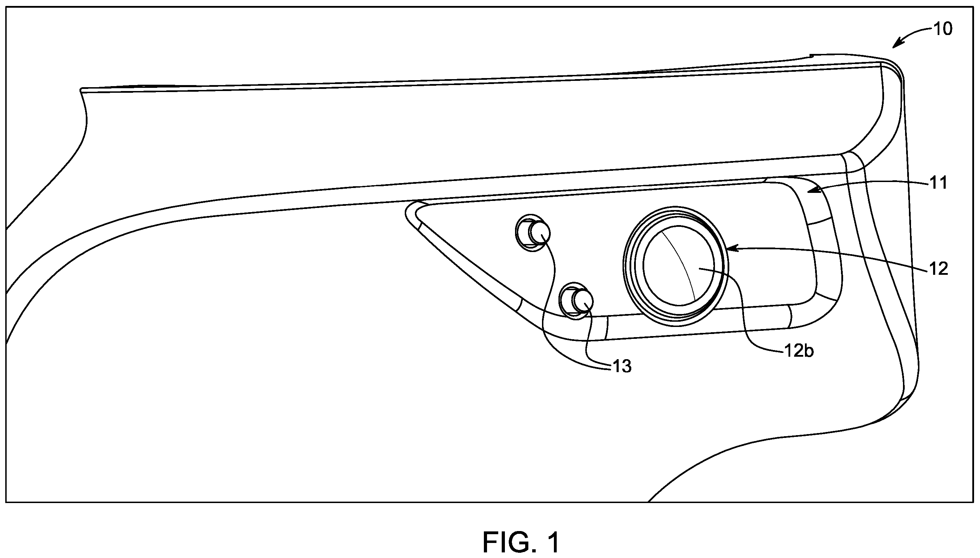

Fig. 1 illustrates a configuration for a surface-mounted camera on a vehicle according to prior art.

Fig. 1 shows a surface-mounted camera system 10 comprising a fixation surface area 11 from which protrudes the lens 12b of the camera 12 and the nozzles 13. The integration of the surface-mounted camera 12 and its cleaning nozzles 13 into an added element of the vehicle or into the bodywork of the vehicle is a process designed for ensuring optimal functionality while maintaining the aesthetic appeal or aerodynamic of the vehicle. The camera 12, positioned to capture a desired field of view for performing a camera-enabled function (such as safety and navigational aids), is mounted to slightly protrude towards outside. This protrusion ensures that the camera 12 has an unobstructed view of the vehicle's surroundings, free from the limitations imposed by the surface of the added-element or the bodywork. Accompanying the camera 12, the cleaning nozzles 13 can be placed to ensure that the lens can be maintained clear of any dirt such as debris, dust, salt and water that could impair its functionality. These nozzles 13 can spray air or cleaning fluid onto the camera lens surface at the push of a button or automatically, depending on the system's design, ensuring that the camera's view remains clear in all conditions.

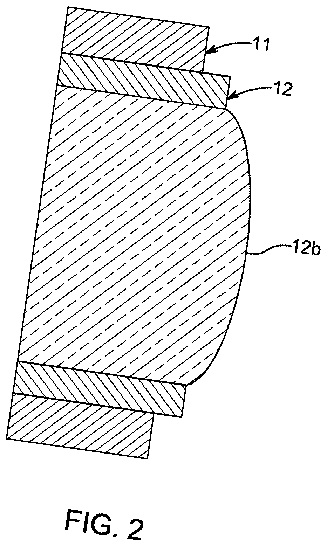

A rounded (i.e. a circle) cut-out is performed on the external surface where the camera is placed (an external surface of the added element or the bodywork of the vehicle) for allowing a cylindrical protrusion of the lens, which is typical for the conventional art. Fig. 2 illustrates a cut view of the surface-mounted camera system according to the conventional embodiment of Fig. 1. The camera 12 protrudes from the fixation surface area 11, with the lens 12b of the camera 12 being exposed to the external dirt and/or potential chocs or damages. Further, the space between the camera and the fixation surface area must be sealed. In most cases, this is done by adding a cylindrical joint in that space. A similar configuration is necessary for each potential cleaning nozzle 13 which could protrude towards the outside.

Such a design has been considered as it takes into account both aerodynamics and aesthetics, thus ensuring that the camera and nozzles blend with the vehicle's lines, minimizing drag and maintaining the sleek look of the vehicle. However, such a system has many downsides. Firstly, the surface-mounted camera system remains very exposed to the outside. That is to say that its various components (the camera and potential nozzles) are particularly exposed to external damages or dirt. Further, they are still detrimental to the aesthetics of the vehicle in that the external footprint of the surface-mounted camera system 10 comprises a rather broad surface considering the effective surface of the lens 12b for performing the function of the camera 12. Indeed, the exposed surface or footprint comprises the entirety of the fixing area to include both the lens 12b and the potential nozzles 13. In addition, such nozzles 13 are not covered by any styling and need to protrude more that the camera lens 12b.

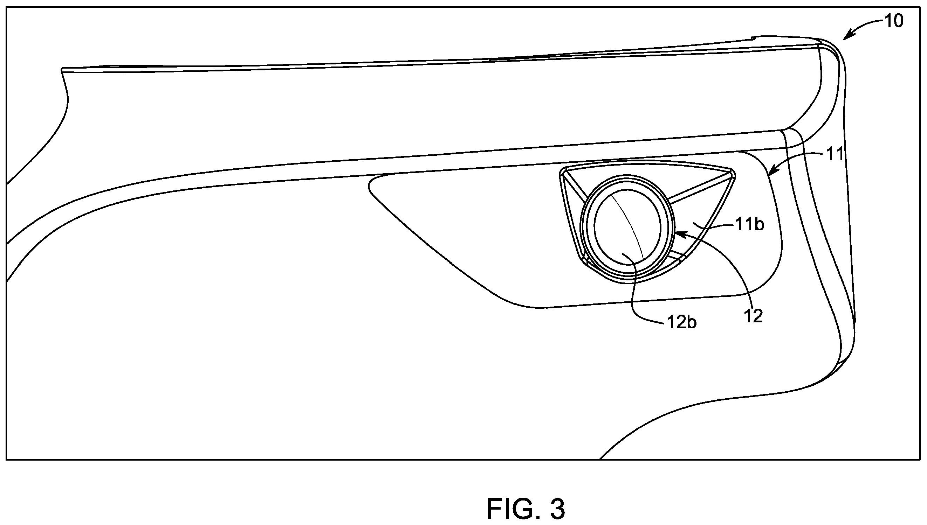

Fig. 3 illustrates an embodiment with the minimal possible cut-out with a round lens hole or cut-out 11b performed on the cover part of the bodywork if the fixation surface area 11. In such an approach, the totality of the lens remains exposed.

The Applicant has discovered that only a part of the surface of the lens 12b of the camera 12 necessitates to be exposed to perform most of the camera-enabled functionalities expected. Indeed, the applicant discovered that not the whole area of the lens 12b is needed to fulfill the mission of capturing a field of view expected by the computer of the vehicle to perform a specific camera enabled-function, such that the cut-out around the lens can be changed in a way to cover an non-effective surface of the lens (that is to say a surface where no necessary image for the expected field of view is captured) and to leave exposed to the outside only an effective surface of the lens, wherein the effective surface of the lens is a surface of the lens corresponding to the desired field of view, that needs to be captured for the specific camera enabled functionality that the camera is supposed to support. The effective surface of the lens will depend on the field of view that is desired, and can have several non-circular surfaces. For instance, substantially rectangular surfaces are very adapted for certain applications/camera enabled function. For instance, a substantially rectangular effective surface with broader lateral side is very adapted for panoramic field of view, such as rear-view cameras, where capturing a broad scene behind the vehicle is essential.

Other forms/types of non-circular surfaces can be used depending on the use case. An oval or elliptical effective surface provides a balance between the wide coverage of a rectangle and the more uniform field of view of a circle. This shape can be beneficial for side-mounted cameras, where a wide yet balanced coverage area is crucial for detecting objects in blind spots or during lane changes. A square effective surface of the lens, on the other hand, offers a uniform field of view in both horizontal and vertical directions, making it ideal for applications that demand balanced coverage. Advanced Driver-Assistance Systems (ADAS), which require precise imaging for processing and analysis, can significantly benefit from square lenses. Other forms such as hexagonal or octagonal, trapeze effective surface can also be employed. Such more original designs could be particularly advantageous for front-facing cameras that need to meld seamlessly with the grille or bumper design.

In an embodiment, the cut-out 130b may have at least one inclined surface. In particular, the cut-out 130b may have more than one inclined surface. The inclined surfaces may follow a shape of a vehicle's bodywork or add-on elements/attachments added to the external surface/bodywork of a vehicle. The at least one inclined surface may form a funnel or the like. In particular, more than one inclined surfaces may form a funnel with the cut-out positioned at the lowermost point of the funnel.

Each inclined surface may be curved, and in particular may follow the shape of a vehicle's bodywork or add-on elements/attachments added to the external surface/bodywork of a vehicle.

In an embodiment, the at least one inclined surface may provide an individual angle of view of the respective camera application. In other words, the shape of the at least one inclined surface may depend on the use case.

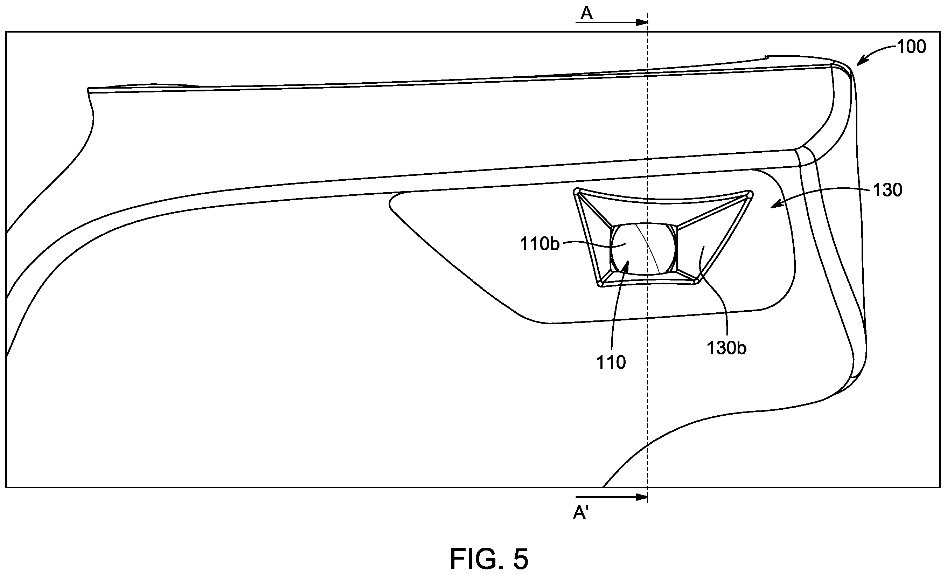

According to fig. 5, the cut-out 130b may have four inclined surfaces forming a funnel. Further, according to fig. 5, the "opening" of the cut-out 130b may be positioned at the lowermost part of the funnel.

In an embodiment, the field of view desired result in the used of a more or less rectangular cut-out corresponding to a substantially rectangular effective surface of the lens as illustrated in Fig. 5.

As a result, the present invention relates to providing a surface-mounted system which offers a better protection of the elements of the system (lens and nozzles) whilst also providing a smaller external footprint with both mechanical, protection to dirt and aesthetical advantages.

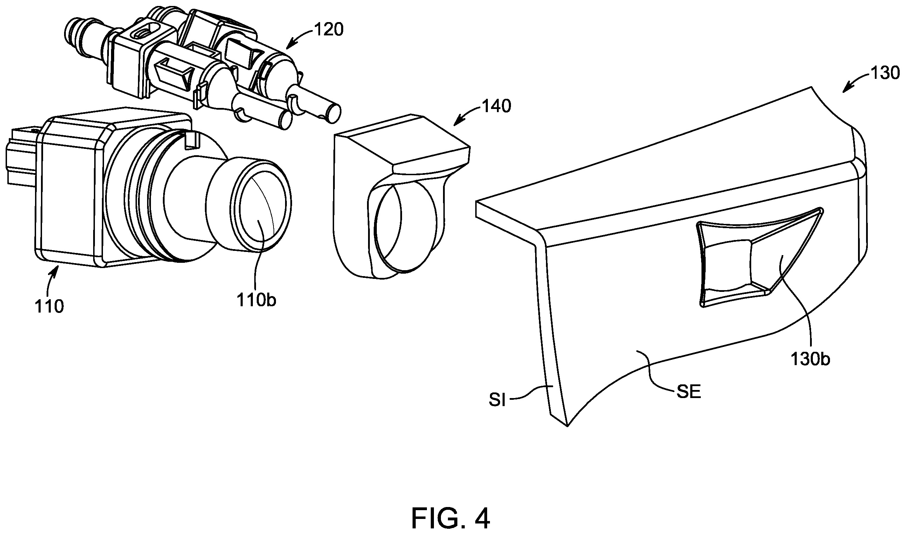

Fig. 4 illustrates the elements that can be integrated in an embodiment according to the present invention. Indeed, such a system comprises a camera 110 with a lens 110b, potentially a pair of cleaning nozzles 120, a cover 130 and optionally a sealing 140.

The camera 110 is configured to capture/image a field of view facing its lens 110b, such that the captured image data can be further transferred for use. As noted above, a part (the effective surface) of the lens is necessary to be exposed to capture image data necessary for a specific camera-enabled applications on the vehicle.

The pair of nozzles 120 can be added and be configured to spray a liquid and/or a gas. The liquid can be any kind of liquid such as water or any kind of cleaning liquid. The gas can be air or any kind of gas. In an advantageous embodiment, one nozzle is for liquid and the other is for gas, such that the gas nozzle can be used to remove the (cleaning) liquid the surface of the lens also. The nozzles are indeed optional as certain positioning of the camera may require such cleaning elements (for instance when the camera is positioned on the front of the vehicle), whilst other positionings may be less exposed to dirt for instance on the backside of the vehicle.

The cover 130 can be designed to fit the aesthetics (such as three-dimensional form and material) of the surface onto which it is placed for instance the external surface of an added elements or accessory onto the vehicle such as an external side-mirror (or elements replacing them and using cameras) or onto the bodywork of the vehicle onto which the surface-mounted camera system 100 is mounted. The cover 130 comprises a cut-out 130b forming a three-dimensional recess between the external surface SE and the internal surface SI of the cover 130, wherein the surface open on the internal side (SI) of the cover is configured to cover the non-effective surface of the lens (110b) and to leave exposed to the outside or to the cut-out at least the effective surface of the lens 110b. The cut-out hole 130b of the cover 130 is greater on the external side (i.e., on the side of the external surface SE facing the environment) of the cover 130 than on the internal side (on the side of the internal surface SI facing the rest of the vehicle). In the example illustrated in Figs. 4 and 5, the cut-out is substantially rectangular to correspond to a substantially rectangular effective surface of the lens 110b. It is to be noted that in a preferred embodiment the cover 130 is nontransparent. Furthermore, the cut-out 130b and its walls can be a different element than the rest of the cover 130.

A sealing element 140 can also be used. In such a case, the sealing element is be used between the cover 130 and the camera 110 and/or nozzles 120 in order to act against wind noise and against liquid flow between the cover 130 and the camera 110. That is to say that the sealing element can be configured to match a form of the camera 110 and a form of the one or more nozzles 120 for insertion of the camera 110 and the nozzle 120 into it (as a sleeve around the camera and the spraying elements of the nozzles for instance) and the sealing element 140 can be further configured to match a form of a portion of the internal surface SI of the cover 130 for the internal surface of the cover to be positioned in contact onto it.

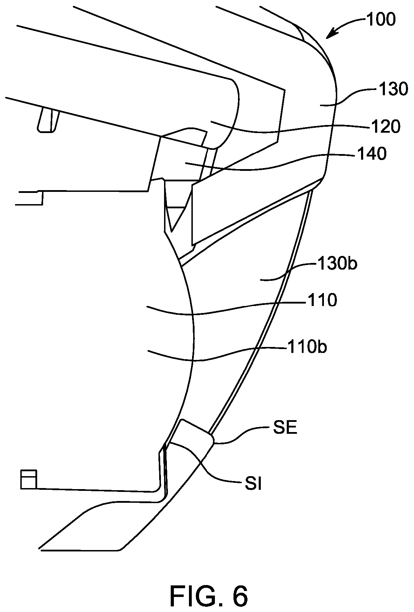

Fig. 5 illustrates an embodiment of the present invention with a substantially rectangular shape cut-out corresponding to a substantially rectangular effective surface of the lens. It discloses a surface-mounted camera system 100 with a cover 130 comprising this substantially rectangular cut-out 130b opening to an exposed surface of the lens 110b of the camera 110. This form of the effective surface is an illustration, and the present embodiment can be used slightly modified to fit other effective surfaces of the lens and other corresponding cut-out of the cover. Fig. 5 also illustrates a cut line AA' and a sight direction for the illustration of Fig. 6.

Fig. 6 is a cut view of the surface-mounted camera system 100 according to an embodiment of the invention.

Fig. 6 shows that the surface-mounted camera system 100 is centered around the camera 110 and its lens 110b, which is partially covered by the cover 130, such that a part of the lens 110b is covered by the cover 130 and a substantially rectangular surface of the lens 110b (the effective surface) is exposed through the recess hole 130b passing through the cover 130 from its external surface SE where it has its largest hole to the internal surface SI where the recess hole is the smallest, to ensure the appropriate fit of the recess 130b with the desired field of view of the camera 110. That is to say that the recess has four walls, a top wall, two side walls (left and right) and a bottom wall. The walls of the recess have angles in an exit direction of the recess 130b (that is to say the direction from the internal surface SI to the external surface SE) that are opening when compared to a normal direction starting from the center of the surface of the lens 110b. The segment of the recess on the internal surface SI of the cover 130 are set to fit to the effective surface of the lens, such that the effective surface is exposed, and the non-effective surface is covered.

One of the walls of the recess 130 has a nozzle recess opened to one or more nozzles 120 which are positioned to spray gas and/or liquid onto the lens 110b to clean it. That is to say that the cover 130 covers also the nozzles 120 from the outside and the nozzles are not exposed to the outside. This nozzle recess is forbidden in embodiment without cleaning nozzles.

In an advantageous embodiment, the nozzle recess is on the top wall of the recess 130b, such that the nozzles 120 can be positioned to point (and spray) downwards to the surface of the lens 110b, and the liquid can be easily expelled through the bottom wall of the recess which has a downward slope through gas spray and/or gravity. In an advantageous embodiment, the above-discussed sealing element 140 can be positioned between the lens 110b and the cover 130. The sealing element 140 is configured to fit the nozzle 120 and lens 11b, such that the camera can be inserted into it as if the sealing element is a sleeve and the nozzle can be inserted into the sealing element and spray its gas and/or liquid through the sealing element 140 towards the lens 110b.

In an embodiment with one or more nozzles, there is no nozzle recess as an opening in the cut-out for letting the nozzle spray the liquid and/or gas. Instead, the camera 110 (or the camera and the sealing element 140) is movable and can be controlled to be moved in the internal direction to create a distance between the camera lens 110b and the cover 130, leaving space for one or more concealed nozzles to perform their cleaning function. The camera can then be controlled to be moved back in its original position after the cleaning.

In the invention, the mechanical integration is facilitated in that only one element - the lens - protrudes to outside, thus ensuring better protection and concealment of the camera system and rendering the sealing issue easier to manage. The elements are better protected from potential damages and dirt in that only the effective surface of the camera lens is exposed to the exterior resulting in a smaller visible surface exposed. Further this exposure is from a cut-out in the form of a recess, thus moving the exposed surface of the lens 12b away from the sources of dirt or damages.

## Claims

1. A surface-mounted camera system (100) for vehicles, comprising:
a camera (110) with a lens (110b) designed to capture images, wherein a surface of the lens (100b) comprises a non-effective surface and an effective surface, wherein the effective surface of the lens is a surface of the lens corresponding to a desired field of view and the non-effective surface is a surface of the lens not corresponding to the desired field of view;
a cover (130) positioned onto the camera (110),
wherein the cover (130) comprises a cut-out (130b) performed from an internal surface (SI) of the cover (130) to an external surface (SE) of the cover (130),
wherein the internal surface (SI) of the cover (130) is positioned onto the camera (110) such that the cut-out (130b) of the cover (130) aligns with the lens (110b) of the camera (110) and covers the non-effective surface whilst leaving the effective surface of the lens (110b) exposed in the direction of the external surface of the cover (130) through the cut-out (130b).

2. The surface-mounted camera system (100) according to claim 1, further comprising:
a cleaning nozzle (120) configured to spray a cleaning fluid or air and positioned such as to spray in the direction of the lens (110b) to clean the surface of the lens (110b);
wherein the cover (130) further comprises a nozzle recess performed in a wall of the cut-out (130b) in the side of the internal surface (SI) of the cover (130), wherein nozzle recess is configured to leave room for the nozzle (120) when the cover (130) is positioned onto it.

3. The surface-mounted camera system (100) according to claim 1 or 2, wherein the cut-out (130b) of the cover (130) is greater on the external surface (SI) of the cover (130) than on the internal surface (SI).

4. The surface-mounted camera system (100) according to any one of the preceding claims, wherein the nozzle (120) is completely concealed within the nozzle recess of the cover (130).

5. The surface-mounted camera system (100) according to any one of the preceding claims, wherein the nozzle (120) and the nozzle recess are positioned on a top wall of the cut-out (130b) and the nozzle (120) is positioned to spray onto the surface of the lens (110b) in a substantially downward direction.

6. The surface-mounted camera system (100) according to any one of the preceding claims, wherein the cleaning nozzle (120) comprises a plurality of nozzles (120) with at least one nozzle (120) for spraying liquid and at least one another for spraying gas.

7. The surface-mounted camera system (100) according to any one of the preceding claims, further comprising a sealing element (140) positioned between the cover (130) and the camera (110) and/or nozzles (120) to prevent wind noise and liquid infiltration.

8. The surface-mounted camera system (100) according to claim 7, wherein the sealing element (140) is configured to match a form of the camera (110) and a form of the nozzle (120) for insertion of the camera (110) and the nozzle (120) into it and the sealing element (140) is further configured to match a form of a portion of the internal surface (SI) of the cover (130) for the internal surface of the cover (130) to be positioned onto it.

9. The surface-mounted camera system (100) according to any of the preceding claims, wherein the cover is in two parts, with one comprising the walls of the cut-out.

10. A vehicle comprising at least one surface-mounted camera system (100) of any one of claim 1 to 9 mounted on the vehicle.
